(19) Europäisches Patentamt
European Patent Office
Office européen des brevets

(11) **EP 2 693 403 B1**

(12) **EUROPÄISCHE PATENTSCHRIFT**

(45) Veröffentlichungstag und Bekanntmachung des Hinweises auf die Patenterteilung:
**11.02.2015 Patentblatt 2015/07**

(51) Int Cl.:
**G06T 7/00** (2006.01) **G01N 21/88** (2006.01)
**G01N 21/89** (2006.01)

(21) Anmeldenummer: **13455004.5**

(22) Anmeldetag: **28.05.2013**

(54) **Verfahren zur Prüfung eines zusammenhängenden Bildbereichs auf Fehler im Oberflächenbereich eines Gegenstands**

Method for testing a contiguous section of an image for errors in the surface area of an object

Procédé de contrôle d'une zone d'image cohérent pour rechercher des erreurs dans la zone de surface d'un objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2012 AT 503072012**

(43) Veröffentlichungstag der Anmeldung:
**05.02.2014 Patentblatt 2014/06**

(73) Patentinhaber: **AIT Austrian Institute of Technology GmbH
1220 Wien (AT)**

(72) Erfinder:
• **Soukup, Daniel
1020 Wien (AT)**
• **Huber-Mörk, Reinhold
1220 Wien (AT)**
• **Mayer, Konrad
1230 Wien (AT)**

(74) Vertreter: **Wildhack & Jellinek
Patentanwälte
Landstraßer Hauptstraße 50
1030 Wien (AT)**

(56) Entgegenhaltungen:
**EP-A2- 2 463 175**

**Beschreibung**

Die Erfindung betrifft ein Verfahren zur Prüfung eines zusammenhängenden Bildbereichs auf Fehler im Oberflächenbereich eines im Bildbereich abgebildeten Gegenstands gemäß dem Oberbegriff des unabhängigen Patentanspruchs 1, wie insbesondere konkave Oberflächenbereiche oder Oberflächendefekte oder Vertiefungen. Weiters betrifft die Erfindung einen Datenträger gemäß Anspruch 12.

Grundsätzlich besteht im Stand der Technik die Möglichkeit, oberflächlich auf Gegenständen, z.B. Metallprofilen, angeordnete Oberflächenfehler, insbesondere Poren oder Risse, dadurch zu erkennen, dass eine Bildverarbeitungseinheit in Form eines Zeilensensors auf die Oberfläche des Gegenstands gerichtet wird und der Gegenstand relativ zum Zeilensensor bewegt wird, sodass ein Flächenbild der Oberfläche des Gegenstands erstellt wird. Um hierbei Oberflächen besser erkennen zu können, sieht der Stand der Technik weiters vor, dass zwei in Richtung der Fortbewegungsrichtung des Gegenstands geneigte Lichtquellen auf den Gegenstandsbereich der Lichtquelle in unterschiedlichen Farben und aus unterschiedlichen Winkeln einstrahlen. Hierdurch ergeben sich im Bereich der Abbildung von Oberflächendefekten unterschiedliche Muster, wobei im Wesentlichen parallele oder einander zugeordnete Farbbereiche im Bild entstehen, die jeweils die Farbe des Lichts der Lichtquelle aufweisen.

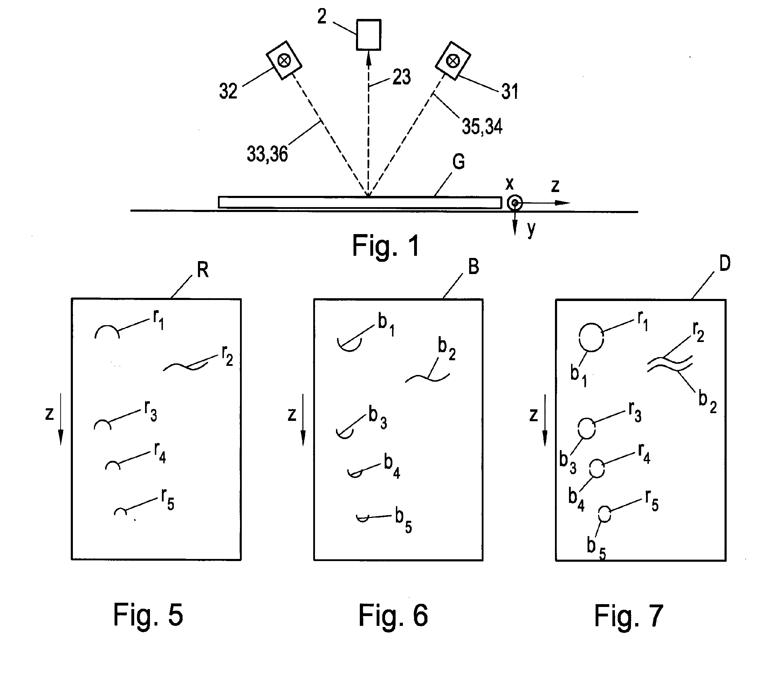

Der Stand der Technik ist in den **Fig. 1 bis 7** näher dargestellt. In **Fig. 1** ist ein abzubildender länglicher Gegenstand G, im vorliegenden Fall eine Eisenbahnschiene, dargestellt, der entlang einer Fortbewegungsrichtung z, die der Längserstreckungsrichtung z des Gegenstands G entspricht, gegenüber einem Zeilensensor 2 verschoben wird. Zeilenbilder des Gegenstands G werden mit dem Zeilensensor 2 aufgenommen. Der Aufnahmebereich des Gegenstands G liegt in einer Ebene xy, die normal zur Längserstreckungsrichtungsrichtung z des Gegenstands G ausgerichtet ist. Der Bereich der Oberfläche des Gegenstands G befindet sich dabei im Aufnahmebereich des Zeilensensors 2.

Zudem sind in der in **Fig. 1** dargestellten Vorrichtung zwei gegenüber dem Zeilensensor 2 lagefest angeordnete Lichtquellen 31, 32 vorgesehen.

Die erste der beiden Lichtquellen 31 gibt eine Strahlung im Wellenlängenbereich eines ersten Bildkanals R ab und ist in Längserstreckungsrichtung z in Bewegungsrichtung gesehen vor dem Zeilensensor 2 angeordnet. Die erste Lichtquelle 31 gibt eine Lichtebene ab, die sich mit der Ebene des Aufnahmebereichs 20 im Bereich des Gegenstands G schneidet.

Die zweite der beiden Lichtquellen 32 gibt eine Strahlung im Wellenlängenbereich eines zweiten Bildkanals B ab und ist in Längserstreckungsrichtung z nach dem Zeilensensor 2 angeordnet. Die zweite Lichtquelle 32 gibt eine Lichtebene ab, die sich mit der Ebene des Aufnahmebereichs 20 im Bereich des Gegenstands G schneidet.

Der Zeilensensor 2 weist eine Anzahl von Pixelsensoren zur separaten Erkennung des Lichts bei einer der beiden Lichtquellen 31, 32 für jeweils einen der beiden Bildkanäle R, B auf. Mit jedem der Pixelsensoren lässt sich somit separat ein Intensitätswert für jeden der beiden Bildkanäle R, B ermitteln. Die Pixelsensoren messen oder ermitteln somit, wie groß der Anteil des jeweils auf sie reflektierten Lichts der Lichtquellen 31, 32 ist.

Durch Aneinanderfügung der mit dem Zeilensensor 2 aufgenommenen Zeilenbilder wird ein Flächenbild D erstellt. Das Flächenbild D weist zwei Farbkanäle R, B auf, wobei die Farbe des ersten Bildkanals R der Farbe oder dem bevorzugten Wellenlängenbereich der ersten Lichtquelle 31 und die Farbe des zweiten Bildkanals B dem bevorzugten Wellenlängenbereich der zweiten Lichtquelle 32 entspricht. Im vorliegenden Fall werden ein roter Bildkanal R und ein blauer Farbkanal B verwendet.

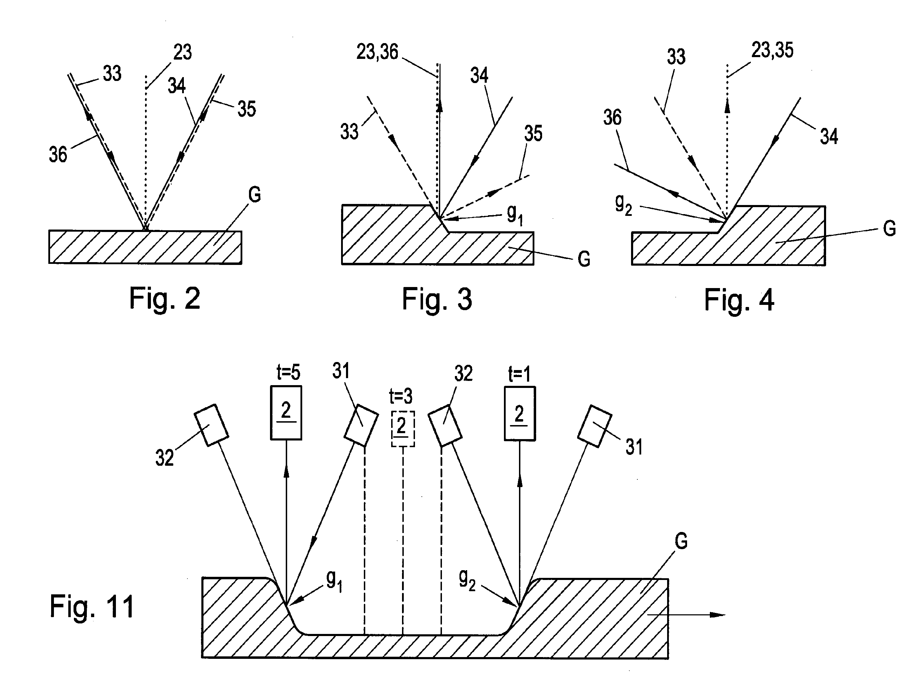

In **Fig. 2** ist ein Detail aus **Fig. 1** dargestellt. Die beiden Strahlen 33, 34 der Lichtquellen 31, 32 treffen auf dem Gegenstand G auf, dessen Oberfläche in dem auf dem Zeilensensor 2 abgebildeten Bereich normal zum Sehstrahl 23 des Zeilensensors 2 steht. Der von der ersten Lichtquelle 31 abgegebene Strahl 34 wird vom Gegenstand G abgelenkt, wobei dessen reflektierter Strahl 36 etwa in Richtung der zweiten Lichtquelle 32 abgelenkt wird.

Der von der zweiten Lichtquelle 32 abgegebene Strahl 33 wird vom Gegenstand G abgelenkt, wobei dessen reflektierter Strahl 35 etwa in Richtung der ersten Lichtquelle 31 abgelenkt wird.

In **Fig. 3** ist ein Detail aus **Fig. 1** dargestellt, wobei der Gegenstandsbereich $g_1$ des Gegenstands G in Richtung der Längserstreckungsrichtung z geneigt ist. Der von der ersten Lichtquelle 31 abgehende Lichtstrahl 34 wird aufgrund der Verkippung der Oberfläche des Gegenstands im Bereich $g_1$ auf den Zeilensensor 2 abgebildet, der reflektierte Strahl 36 liegt somit auf dem Sehstrahl 23 des Zeilensensors 2. Der von der zweiten Lichtquelle 32 abgehende Strahl 33 wird im Bereich $g_1$, in dem der Sehstrahl 23 des Zeilensensors 2 auf den Gegenstand G trifft, reflektiert, der diesbezügliche reflektierte Lichtstrahle 35 geht zur Seite ab.

In **Fig. 4** ist ein Detail aus **Fig. 1** dargestellt, wobei der Gegenstandsbereich $g_2$ des Gegenstands G entgegen die Längserstreckungsrichtung z geneigt ist. Der von der zweiten Lichtquelle 32 abgehende Lichtstrahl 33 wird aufgrund der Verkippung des Gegenstands im Bereich $g_2$ auf den Zeilensensor 2 abgebildet, der reflektierte Strahl 35 liegt somit auf dem Sehstrahl 23 des Zeilensensors 2. Der von der zweiten Lichtquelle 31 abgehende Strahl 34 wird im Bereich $g_2$, in dem der Sehstrahl 23 des Zeilensensors 2 auf den Gegenstand G trifft, reflektiert, der diesbezügliche reflektierte Lichtstrahl 36 geht zur Seite ab.

In **Fig. 5** ist der erste oder rote Bildkanal des durch den Zeilensensor erstellten Digitalbilds dargestellt, in dem die - in Gegenstandsrichtung des zu inspizierenden Gegenstands gesehen - vordere Flanke einer oberflächlichen Vertiefung dargestellt ist. **Fig. 6** zeigt den zweiten Bildkanal, im vorliegenden Fall den blauen Bildkanal, des Digitalbilds B, in dem die - in Gegenstandsrichtung des zu inspizierenden Gegenstands gesehen - hintere Flanke einer oberflächlichen Vertiefung dargestellt ist.. **Fig. 7** zeigt das durch die beiden in **Fig. 5** und **Fig. 6** dargestellten Bildkanäle R, B erstellte Digitalbild D.

Das vorstehend dargestellte aus dem Stand der Technik bekannte Verfahren dient der Bestimmung von Oberflächenbeschädigungen oder oberflächlichen Veränderungen von zu inspizierenden Gegenständen. Ein wesentliches Problem solcher Verfahren liegt darin, dass eine genaue und numerisch stabile, robuste und einfache Bestimmung von derartigen Oberflächenfehlern nur sehr schwer möglich ist.

Somit besteht die erfindungsgemäße Aufgabe, bei einem Verfahren der eingangs genannten Art die vorstehend genannten Nachteile zu vermeiden und ein Verfahren zur Verfügung zu stellen, das diese Nachteile nicht aufweist.

Die Erfindung löst diese Aufgabe mit einem Verfahren der eingangs genannten Art mit den kennzeichnenden Merkmalen des unabhängigen Patentanspruchs 1.

Erfindungsgemäß ist bei einem Verfahren zur Prüfung eines zusammenhängenden Bildbereichs innerhalb eines zweidimensionalen Digitalbilds auf das Vorhandensein von Oberflächenfehlern in dem auf den Bildbereich innerhalb des Digitalbilds abgebildeten Oberflächenbereich eines Gegenstands,

wobei der abgebildete Gegenstand eine Längserstreckung aufweist, deren Längserstreckungsrichtung mit der ersten Koordinatenrichtungen des zweidimensionalen Digitalbilds übereinstimmt, und wobei das jeweilige Digitalbild zumindest zwei Bildkanäle aufweist, sodass jedem Pixel jeweils ein erster und ein zweiter Intensitätswert zugeordnet ist, vorgesehen, dass

für jedes Pixel mit Bildkoordinaten innerhalb des Bildbereichs die folgenden Schritte (a) bis (d) durchgeführt werden, nämlich dass

(a) für die beiden Intensitätswerte der Bildkanäle für das jeweilige Pixel ein Abweichungswert mittels einer Abweichungsfunktion $\Delta(-,-)$ gemäß $\Delta(P) = \Delta(R(P), B(P))$ ermittelt wird, wobei der Wert der Abweichungsfunktion umso größer ist, je mehr der erste Intensitätswert den zweiten Intensitätswert übersteigt,

(b) jeweils für sämtliche Pixel des Bildbereichs auf dieselbe Weise die Anzahl der möglichen Ergebnisse der in Schritt (a) ausgewerteten Abweichungsfunktionen in eine Anzahl von Intervallen unterteilt wird, wobei die einzelnen Intervalle nach steigendem Intervallmittelwert indiziert werden, und ermittelt wird, in welches der Intervalle der für das Pixel im Schritt (a) ermittelte Abweichungswert fällt und dieses Intervall dem jeweiligen Pixel zugewiesen wird,

(c) jeweils für sämtliche Pixel jeweils eine Anzahl von voneinander unterschiedlichen Verschiebungswerten vorgegeben wird, und für das jeweilige Pixel jeweils eine Anzahl von weiteren Pixeln ermittelt wird, deren in Richtung der Längserstreckung verlaufende Koordinate jeweils um einen der vorgegebenen Verschiebungswerte größer ist als die entsprechende Koordinate des jeweiligen Pixels und deren jeweils andere Koordinate der entsprechenden Koordinate des jeweiligen Pixels gleich ist,

$$m = k + d, n = l,$$

(d) für jedes der dem jeweiligen Pixel zugeordneten weiteren Pixel

(i) jeweils ein weiterer Abweichungswert gemäß $\Delta'(P_m) = \Delta'(R(P_m), B(P_m))$ ermittelt wird, wobei der Wert der weiteren Abweichungsfunktion umso größer ist, je mehr der zweite Intensitätswert den ersten Intensitätswert übersteigt, und

(ii) jeweils für sämtliche weiteren Pixel auf dieselbe Weise die Anzahl der möglichen Ergebnisse der in Schritt (d, i) ausgewerteten weiteren Abweichungsfunktion $\Delta'$ in eine Anzahl von weiteren Intervallen unterteilt wird, wobei die einzelnen Intervalle nach steigendem Intervallmittelwert indiziert werden, und ermittelt wird, in welches der weiteren Intervalle der für das weitere Pixel im Schritt (d, i) ermittelte weitere Abweichungswert fällt und

(iii) ein durch das dem jeweiligen Pixel zugewiesenen Intervall, dem im Schritt (d, ii) ermittelten weiteren Intervall und den jeweiligen Verschiebungswert eindeutig adressierter und vor der Durchführung des Schritts initialisierter Speicherbereich C(I, I', d) um einen vorgegebenen Wert erhöht wird,
sodass nach Durchlaufen sämtlicher Pixel für jede Kombination jedes im Schritt b) festgelegten Intervalls, eines im Schritt (d, ii) festgelegten weiteren Intervalls und eines Verschiebungswerts jeweils ein Zählwert zur Verfügung steht, und

(e) anschließend aus dem Speicherbereich C für jeden der Verschiebungswerte jeweils eine Cooccurrence-Matrix ermittelt wird, wobei die einzelnen Elemente der Cooccurrence-Matrizen gemäß der folgenden Vorschrift festgelegt werden:

$$C_d = [c_{i,j,d}]; \qquad c_{i,j,d} = C(I_i, I'_j, d)$$

(f) die einzelnen Elemente der Cooccurrence -Matrizen normiert werden, und eine gemittelte Cooccurrence-Matrix $\underline{C}$ als Mittelwert der normierten Cooccurrence-Matrizen gebildet wird, und

(g) aus den Elementen der gemittelten Cooccurrence-Matrix $\underline{C}$ diejenigen ihrer Elemente $\underline{c}_{i,j}$ akkumuliert werden, deren jeweiliger Index einen vorgegebenen Mindestwert $i_0$, $j_0$ übersteigt, wobei als Ergebnis der Akkumulation ein Resultatwert u erhalten wird, der mit einem Schwellenwert t verglichen wird und

(h) dass für den Fall, dass t > u ein Oberflächenfehler im jeweiligen auf den Bildbereich abgebildeten Oberflächenbereich als vorhanden angesehen wird.

Um eine vorteilhafte Unterscheidung von blauen und roten Farbanteilen in Pixeln zu ermöglichen, kann vorgesehen sein, dass die Abweichungsfunktion $\Delta(\cdot,\cdot)$ wie folgt festgelegt wird:

$$\Delta(P) = \Delta(R(P), B(P)) = \begin{cases} R(P) - B(P), & \text{wenn } R(P) - B(P) > 0 \\ 0, & \text{sonst.} \end{cases}$$

Zum selben Zweck kann vorteilhafterweise vorgesehen sein, dass die weitere Abweichungsfunktion durch die Abweichungsfunktion wie folgt festgelegt wird:

$$\Delta'(P_1) = \Delta'(R(P_1), B(P_1)) = \Delta(B(P_1), R(P_1)).$$

Um den numerischen Aufwand zu reduzieren und Ergebnisse in vertretbarem Zeitaufwand zu erhalten, kann vorgesehen sein,

- dass eine Anzahl von, insbesondere gleich großen, Intervallen im Wertebereich der Abweichungsfunktion ausgewählt wird, die überlappungsfrei und sämtliche möglichen Werte der Abweichungsfunktion abdeckend im Wertebereich der Abweichungsfunktion liegen, **und/oder**
- dass eine Anzahl von, insbesondere gleich großen, weiteren Intervallen im Wertebereich der weiteren Abweichungsfunktion ausgewählt wird, die überlappungsfrei und sämtliche möglichen Werte der weiteren Abweichungsfunktion abdeckend im Wertebereich der weiteren Abweichungsfunktion liegen, **und/oder**
- dass die Anzahl der Intervalle und die Anzahl der weiteren Intervalle gleich groß gewählt wird.

Um Oberflächenfehler von unterschiedlicher Ausdehnung in Ausdehnungsrichtung des zu inspizierenden Gegenstands feststellen zu können, kann vorgesehen sein,

- dass als Verschiebungswerte ganzzahlige Werte in einem Bereich zwischen 1 und 10 gewählt werden, **und/oder**
- dass eine Anzahl von drei bis fünf Verschiebungswerten gewählt wird **und/oder**
- dass als Verschiebungswerte eine Anzahl von unmittelbar aufeinander folgenden ganzzahligen Werten gewählt wird, deren kleinster Wert zwischen 1 und 3 und/oder deren größter Wert zwischen 5 und 10 und/oder deren Anzahl zwischen 3 und 8 gewählt wird.

Eine konkrete Anpassung an bestimmte Arten von Oberflächenfehlern sieht vor,

- dass der Mindestwert so gewählt wird, dass die Intervalle, deren zugeordneter Index kleiner ist als der Mindestwert oder dem Mindestwert gleicht, einen Anteil von mindestens 5%, insbesondere mindestens 10%, des gesamten Wertebereichs der Abweichungsfunktion umfassen, und/oder

- dass der weitere Mindestwert so gewählt wird, dass die weiteren Intervalle, deren zugeordneter Index kleiner ist als der weitere Mindestwert oder dem weiteren Mindestwert gleicht, einen Anteil von mindestens 5%, insbesondere mindestens 10%, des gesamten Wertebereichs der weiteren Abweichungsfunktion umfassen.

Zur Vermeidung von der Erkennung von Falschpositiven kann vorgesehen sein, dass für ein weiteres Pixel ausschließlich dann ein Wert im Speicherbereich erhöht wird, wenn das weitere Pixel innerhalb des Bildbereichs liegt.

Um große und kleine Bildfehler nach gleichen Maßstäben beurteilen zu können sowie zur Erreichung einer von der Bildauflösung unabhängigen Beurteilung von Bildfehlern kann vorgesehen sein, dass die einzelnen Cooccurrence-Matrizen normiert werden, indem jeder der Werte der jeweiligen Cooccurrence-Matrix durch die Gesamtsumme der einzelnen Elemente der jeweiligen Cooccurrence-Matrix dividiert wird.

Um Oberflächenfehler mit unterschiedlicher Ausdehnung in Ausdehnungsrichtung des zu inspizierenden Gegenstands feststellen zu können, kann vorgesehen sein, dass die mittlere Cooccurence-Matrix durch elementweise arithmetische Mittelwertbildung der Cooccurrence-Matrizen erstellt wird, insbesondere gemäß der folgenden Vorschrift:

$$\underline{C} = 1/N * SUMME(d=1...N)\ C_d$$

wobei N der Anzahl der Cooccurrence-Matrizen entspricht.

Vorteilhafterweise kann zur Aufnahme eines Gegenstands vorgesehen sein, dass vor der Bestimmung von Oberflächenfehlern das Digitalbild folgendermaßen aufgenommen wird:

a) dass der Gegenstand mit einem Zeilensensor aufgenommen wird, dessen Aufnahmebereich in einer vorgegebenen Ebene liegt, die normal zur Längserstreckungsrichtung des Gegenstands ausgerichtet ist, wobei sich der Gegenstand im Aufnahmebereich des Zeilensensors befindet,

b) dass zumindest zwei gegenüber dem Zeilensensor lagefest angeordnete Lichtquellen eingesetzt werden, wobei die erste Lichtquelle zur Abgabe einer Strahlung im Wellenlängenbereich des ersten Bildkanals in Längserstreckungsrichtung vor dem Zeilensensor angeordnet wird und die zweite Lichtquelle zur Abgabe einer Strahlung im Wellenlängenbereich des zweiten Bildkanals in Längserstreckungsrichtung hinter dem Zeilensensor angeordnet wird und das jeweilige Licht beider Lichtquellen in dem Bereich des Gegenstands eingestrahlt wird, der im Aufnahmebereich des Zeilensensors liegt,

c) dass der Zeilensensor jeweils eine Anzahl von Pixelsensoren zur separaten Erkennung des Lichts einer der beiden Lichtquellen für jeweils einen der beiden Bildkanäle aufweist, wobei mit jedem der Pixelsensoren separat ein Intensitätswert des von jeder der beiden Lichtquellen abgegebenen und auf ihn reflektierten Lichts gemessen wird,

d) dass mit jedem Pixelsensor jeweils ein erster Intensitätswert ermittelt wird, der dem von der ersten Lichtquelle abgegebenen und auf den Pixelsensor reflektierten Licht entspricht, und ein zweiter Intensitätswert ermittelt wird, der dem von der zweiten Lichtquelle abgegebenen und auf den Pixelsensor reflektierten Licht entspricht,

e) dass der Zeilensensor und die Lichtquellen zueinander lagefest sind und in Längserstreckungsrichtung des zu inspizierenden Gegenstands relativ zu diesem bewegt werden, und

f) dass mit dem Zeilensensor eine Anzahl von Zeilenbildern aufgenommen wird, die entsprechend ihrer Aufnahmereihenfolge zu einem zweidimensionalen Digitalbild zusammengesetzt werden.

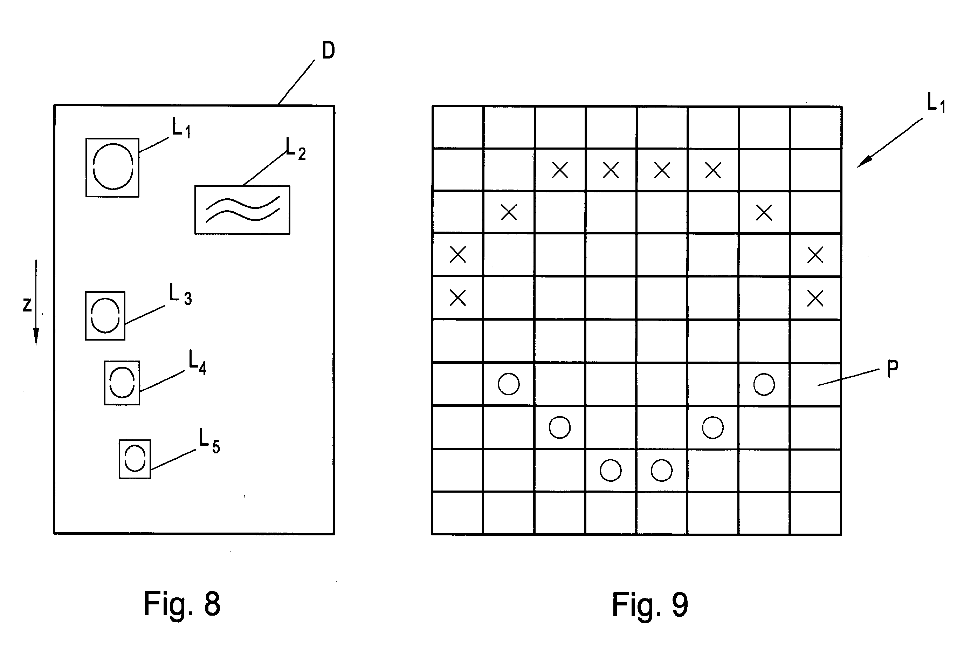

Ein vorteilhaftes Ausführungsbeispiel der Erfindung, das den eingangs genannten und in den **Fig. 1 bis 7** dargestellten Stand der Technik verbessert, wird im Folgenden anhand der **Fig. 8 bis 13** dargestellt.

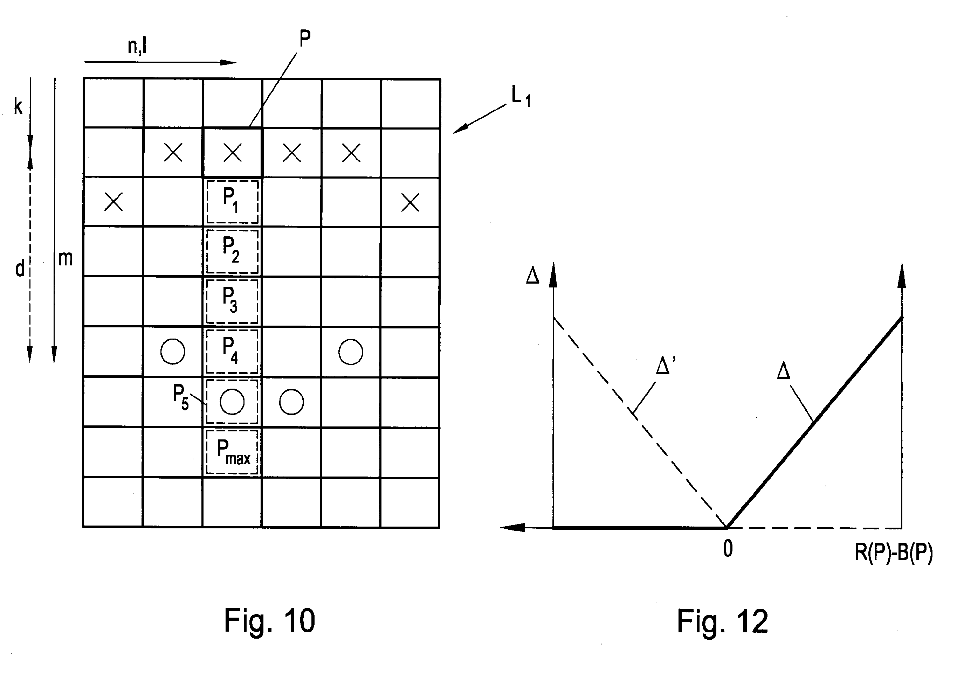

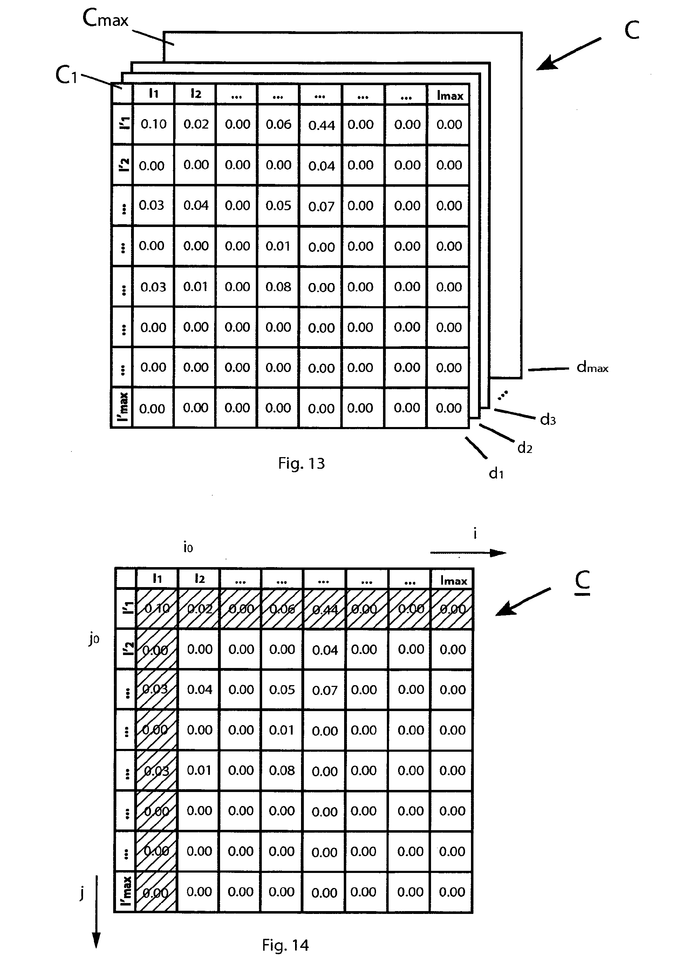

**Fig. 8** zeigt ein Digitalbild des Gegenstands, in dem eine Anzahl von Bildbereichen detektiert worden ist, die Merkmale aufweisen, die Oberflächenfehler darstellen könnten. **Fig. 9** zeigt einen der in **Fig. 8** dargestellten Bildbereiche im Detail. **Fig. 10** zeigt die Beurteilung eines Bildbereichs mit unterschiedlichen Verschiebungswerten. **Fig. 11** zeigt ein bevorzugtes Ausführungsbeispiel zur Bestimmung von Abweichungswerten durch eine Abweichungsfunktion. **Fig. 12** zeigt die Bedeutung des Verschiebungswerts anhand eines oberflächlich am Gegenstand G befindlichen Oberflächenfehlers. **Fig. 13** zeigt eine Anzahl von Cooccurrence-Matrizen für unterschiedliche Verschiebungswerte. **Fig. 14** zeigt

**EP 2 693 403 B1**

eine mittlere Cooccurrence-Matrix sowie die Bestimmung, ob ein Oberflächenfehler vorliegt.

Wie in **Fig. 8** dargestellt, weist das Digitalbild D eine Vielzahl von Bildbereichen $L_1$, ..., $L_5$ auf, die grundsätzlich als Oberflächenfehler F in Betracht kommen und auf das Vorliegen von Oberflächenfehlern F überprüft werden. Für sämtliche dieser Bildbereiche $L_1$, ..., $L_5$ wird das im Folgenden dargestellte Verfahren separat ausgeführt. Bei der Beurteilung der einzelnen Bildbereiche $L_1$, ..., $L_5$ wird grundsätzlich ermittelt, ob die Helligkeitswerte der einzelnen Pixel P des Bildbereichs $L_1$, ..., $L_5$ von einem vorgegebenen Hintergrundwert abweichen. Der Hintergrundwert kann auf vielfältige aus dem Stand der Technik bekannte Art und Weise bestimmt werden, insbesondere kann der Hintergrundwert durch Bildung eines gleitenden Mittelwerts bestimmt werden. Die Bildbereiche $L_1$, ..., $L_5$ sind diejenigen Bereiche, in denen die Intensitätswerte der einzelnen Pixel P um einen vorgegebenen Schwellenwert vom jeweiligen Hintergrundwert abweichen. Im vorliegenden Ausführungsbeispiel sind die Bildbereiche $L_1$, ..., $L_5$ der Übersichtlichkeit halber jeweils als Rechtecke dargestellt. Grundsätzlich ist es jedoch möglich und üblich, dass die einzelnen auf Fehler zu untersuchenden Bildbereiche $L_1$, ..., $L_5$ unterschiedlichste Form aufweisen, wobei jeder der Bildbereiche $L_1$, ..., $L_5$ jeweils eine zusammenhängende Menge von Pixeln aufweist. Weiters ist in **Fig. 8** die Längserstreckungsrichtung z des Gegenstands G dargestellt.

In **Fig. 9** sind die einzelnen Pixel des Bildbereichs $L_1$ schematisch näher dargestellt.

Für jedes einzelne der in **Fig. 9** dargestellten Pixel P des Bildbereichs $L_1$ werden die im Folgenden dargestellten Schritte (a) bis (e) nacheinander durchgeführt. Jedem der Pixel P sind, wie in **Fig. 10** dargestellt, jeweils zwei Bildkoordinaten k, l zugewiesen. Dabei entspricht die Koordinate l der jeweiligen Position des Sensorpixels des Zeilensensors, das den jeweiligen Helligkeitswert ermittelt hat. Die zweite Bildkoordinate k des jeweiligen Pixels P des Digitalbilds D entspricht jeweils dem Aufnahmezeitpunkt der Zeile. Gemessen am Gegenstand G verläuft die Koordinatenrichtung der Bildkoordinate k in Längserstreckungsrichtung z bzw. in Fortbewegungsrichtung des Gegenstands G gegenüber dem Zeilensensor 2.

Zur Vorbereitung werden mit jedem Sensorpixel des Zeilensensors jeweils die beiden Intensitätswerte R(P) und B(P) der Bildkanäle für das jeweilige Pixel ermittelt.

Im ersten Schritt (a) wird auf Grundlage des jeweiligen Intensitätswerts im ersten und zweiten Bildkanal R, B jeweils für jedes Pixel separat ein Abweichungswert $\Delta(P) = \Delta(R(P), B(P))$ ermittelt. Hierbei wird ganz allgemein eine Größe gefunden, die angibt, wie stark sich die Intensitätswerte R(P) des jeweiligen Pixels P im ersten oder roten Bildkanal R von den Intensitätswerten B(P) im zweiten oder blauen Bildkanal B unterscheiden. Hierfür wird eine Abweichungsfunktion $\Delta(.,.)$ herangezogen, die im vorliegenden Ausführungsbeispiel der Erfindung näher in **Fig. 12** dargestellt wird. Sofern der Intensitätswert R(P) des Pixels P im ersten oder roten Farbkanal R größer ist als der Intensitätswert B(P) im blauen Farbkanal B, so entspricht der Wert der Abweichungsfunktion $\Delta(R(P), B(P))$ dem Wert der Differenz der beiden Intensitätswerte R(P) - B(P) für das jeweilige Pixel P. Ist jedoch der zweite Intensitätswert B(P) größer als der erste Intensitätswert R(P) des Pixels, so hat der durch Auswertung der Abbildungsfunktion $\Delta$ ermittelte Abweichungswert $\Delta$(P) den Wert 0.

Die Abweichungsfunktion $\Delta(.,.)$ ist in dieser besonderen Ausführungsform der Erfindung wie folgt festgelegt:

$$\Delta(P) = \Delta(R(P), B(P)) = \begin{cases} R(P) - B(P), & \text{wenn } R(P) - B(P) > 0 \\ 0, & \text{sonst.} \end{cases}$$

Dieser Verlauf der Abweichungsfunktion $\Delta$ ist schematisch in **Fig. 11** (durchgezogene Linie) dargestellt. Grundsätzlich können beliebige Abweichungsfunktionen $\Delta$ verwendet werden, deren Wert jeweils umso größer ist, je mehr der erste Intensitätswert R(P) im jeweiligen Pixel P den zweiten Intensitätswert B(P) im jeweiligen Pixel P übersteigt. Der so ermittelte Abweichungswert $\Delta$(P) wird dem jeweiligen Pixel P zugeordnet.

Die Bestimmung des Abweichungswerts $\Delta$(P) erfolgt, um festzustellen, ob im jeweiligen Pixel der Anteil bzw. der Intensitätswert des ersten Bildkanals den Intensitätswert des zweiten Bildkanals wesentlich übersteigt und somit eine oberflächliche Unebenheit $g_1$, wie in **Fig. 3** dargestellt, vorliegt. Pixel P, die aus diesem Grund einen wesentlich höheren Anteil im ersten oder roten Bildkanal R aufweisen, werden somit als Abbildungen eines Oberflächenbereichs $g_1$ des Gegenstands G angesehen, der in Richtung der Fortbewegungsrichtung z abfällt. Solche Pixel sind in den **Fig. 9 und 10** durch das Symbol X dargestellt.

Pixel P, deren Intensitätswert B(P) im zweiten oder blauen Bildkanal B größer ist als deren erster Intensitätswert R(P), zeigen dagegen einen Oberflächenbereich $g_2$, der entgegen der Fortbewegungsrichtung z abfällt und sind in **Fig. 9 und 10** durch das Symbol 0 dargestellt.

In einem zweiten Schritt (b) wird eine Anzahl von Intervallen $I_1$, ..., $I_{max}$ innerhalb des Wertebereichs der Abweichungsfunktion $\Delta(.,.)$ vorgegeben. Im vorliegenden Ausführungsbeispiel liegt jeder Intensitätswert R(P), B(P) eines Pixels P in einem Bereich zwischen 0 und 255. Folglich liegt auch der Wertebereich der Abweichungsfunktion $\Delta(P)$ zwischen 0 und 255. Dieser Wertebereich wird im Folgenden in acht verschiedene, gleich große, nicht überlappende und den gesamten Wertebereich ausfüllende Intervalle $I_1$, ..., $I_{max}$ unterteilt. Die einzelnen Intervalle werden nach steigendem Intervallmittelwert indiziert. Jedes Intervall $I_1$, ..., $I_{max}$ weist folglich eine Intervallbreite von 32 auf, wobei das erste Intervall $I_1$ im Bereich zwischen 0 und 31, das zweite Intervall $I_2$ im Bereich zwischen 32 und 63, ..., und schließlich das letzte Intervall $I_{max}$ im Bereich zwischen 224, ..., 255 liegt. Für jedes der Pixel P wird nunmehr überprüft, in welchem der Intervalle $I_1$, ..., $I_{max}$ der für das Pixel ermittelte Abweichungswert $\Delta(P)$ liegt, der als Ergebnis der in Schritt (a) ausgewerteten Abweichungsfunktion $\Delta$ ermittelt wurde. Dieses Intervall wird fortan mit $I(P)$ bezeichnet.

Alternativ besteht selbstverständlich auch die Möglichkeit, zur Anpassung an bestimmte Arten von Fehlern unterschiedliche Intervallbreiten vorzugeben. So kann beispielsweise auch vorgesehen sein, dass die Intervalle mit geringerem Intervallmittelwert eine kleinere Intervallbreite aufweisen als die Intervalle mit größerem Intervallmittelwert.

In einem dritten Schritt (c) wird eine Anzahl von unterschiedlichen Verschiebungswerten $d_1$, ..., $d_{max}$ vorgegeben. Im vorliegenden Fall werden die Verschiebungswerte $d_1 = 1$, $d_2 = 2$, ..., $d_6 = d_{max} = 6$ vorgegeben.

Die Bedeutung des Verschiebungswerts d erschließt sich aus **Fig. 11,** die die Aufnahme von fünf Gegenstandszeilen des Gegenstands G zu fünf aufeinanderfolgenden Aufnahmezeitpunkten t=1 ... t=5 zeigt.

Zum ersten Aufnahmezeitpunkt t=1 weist der Gegenstand G an seiner Oberfläche eine Kante eines Oberflächenfehlers im auf dem Zeilensensor 2 abgebildeten Bereich mit einer Neigung entgegen der Fortbewegungsrichtung z auf, es ergibt sich eine Situation wie in **Fig. 3** dargestellt. Der zweite Farbwert übersteigt den ersten Farbwert, da lediglich das Licht der ersten Lichtquelle 31 auf den Zeilensensor 2 fällt.

Zum letzten Aufnahmezeitpunkt t=5 weist der Gegenstand G an seiner Oberfläche eine Kante eines Oberflächenfehlers, insbesondere einer Pore, im auf dem Zeilensensor 2 abgebildeten Bereich mit einer Neigung in der Fortbewegungsrichtung z auf, es ergibt sich eine Situation wie in **Fig. 4** dargestellt. Der zweite Farbwert übersteigt den zweiten Farbwert.

Die erstellten Pixel der beiden geneigten Oberflächenbereiche $g_1$, $g_2$ haben aufgrund der Zusammensetzung des Digitalbilds D durch einzelne Zeilenbilder einen Abstand von d=4 Pixeln in Längserstreckungsrichtung z des Gegenstands G. Durch Auswahl verschiedener Verschiebungswerte $d_1$, .., $d_{max}$ lassen sich somit unterschiedlich große zu detektierende Oberflächenfehler auffinden. Die Breite des jeweiligen Oberflächenfehlers entspricht jeweils dem d-fachen des Weges, den der Gegenstand G zwischen zwei aufeinander folgenden Aufnahmezeitpunkten zurücklegt.

Für das jeweilige Pixel P wird jeweils eine Anzahl von weiteren Pixeln $P_1$, ..., $P_{max}$ ermittelt, wobei die in Richtung der Längserstreckung z verlaufende Koordinate m des weiteren Pixels $P_1$, ..., $P_{max}$ jeweils um einen der vorgegebenen Verschiebungswerte $d_1$, ..., $d_{max}$ größer ist als die entsprechende in Längserstreckungsrichtung z verlaufende Koordinate k des jeweiligen Pixels P. Die andere Koordinate n des weiteren Pixels $P_1$, ..., $P_{max}$ entspricht der jeweiligen Koordinate l des jeweiligen Pixels P. Es gilt folglich m = k + d, n = l.

Für das erste weitere Pixel $P_1$ gilt somit, dass sich die in Längserstreckungsrichtung z verlaufende Koordinate m des ersten weiteren Pixels $P_1$ um den vorgegebenen ersten Verschiebungswert $d_1 = 1$ von der jeweiligen in Längserstreckungsrichtung z verlaufenden Koordinate k des Pixels P unterscheidet, somit gilt m = k + $d_1$ = k + 1. Die beiden anderen Koordinaten n, l des Pixels P und des ersten weiteren Pixels $P_1$ sind gleich groß.

Für das zweite weitere Pixel $P_2$ gilt entsprechend, dass sich die in Längserstreckungsrichtung z verlaufende Koordinate m des zweiten weiteren Pixels $P_2$ um den vorgegebenen ersten Verschiebungswert $d_2 = 2$ von der jeweiligen in Längserstreckungsrichtung z verlaufenden Koordinate k des Pixels P unterscheidet, somit gilt m = k + $d_2$ = k + 2. Die beiden anderen Koordinaten n, l des Pixels P und des zweiten weiteren Pixels $P_2$ sind gleich groß.

Für jedes der dem jeweiligen Pixel P zugeordneten weiteren Pixel $P_1$, ..., $P_{max}$ werden die folgenden Schritte (d, i), (d, ii) und (d, iii) durchgeführt.

Für das jeweilige weitere Pixel $P_1$, ..., $P_{max}$ wird im Schritt (d, i) ein weiterer Abweichungswert $\Delta'(P_1)$, $\Delta'(P_2)$, ..., $\Delta'(P_n)$, ..., $\Delta'(P_{max})$ gemäß $\Delta'(P_m) = \Delta'(R(P_m), B(P_m))$ ermittelt. Der so ermittelte Wert der weiteren Abweichungsfunktion $\Delta'$ ist umso größer, je mehr der zweite Intensitätswert $B(P_m)$ den ersten Intensitätswert $R(P_m)$ übersteigt. Ein Beispiel einer solchen weiteren Abweichungsfunktion ist in **Fig. 12** als strichlierte Linie dargestellt. Diese weitere Abweichungsfunktion wird wie folgt festgelegt:

$$\Delta'(P_m) = \Delta'(R(P_m), B(P_m)) = \begin{cases} B(P_m) - R(P_m), & \text{wenn } B(P_m) - R(P_m) > 0 \\ 0, & \text{sonst.} \end{cases}$$

Die weitere Abweichungsfunktion $\Delta'$ wird in diesem besonderen Ausführungsbeispiel der Erfindung wie folgt festgelegt:

$$\Delta'(P_1) = \Delta'(R(P_1), B(P_1)) = \Delta(B(P_1), R(P_1)).$$

Der Wertebereich der weiteren Abweichungsfunktion $\Delta'$, der im vorliegenden Ausführungsbeispiel dem Wertebereich der Abweichungsfunktion $\Delta$ entspricht, wird in eine Anzahl von weiteren Intervallen $I_1'$, ..., $I_{max}'$ unterteilt. Vorteilhafterweise erfolgt die Unterteilung des Wertebereichs der weiteren Abweichungsfunktion $\Delta'$ analog der Unterteilung des Wertebereichs der Abweichungsfunktion $\Delta$. Im vorliegenden Ausführungsbeispiel wird der Wertebereich der weiteren Abweichungsfunktion, der den Bereich der natürlichen Zahlen zwischen 0 und 255 umfasst, in 8 weitere Wertebereiche $I_1'$, ..., $I_{max}'$ unterteilt, die jeweils den gesamten Wertebereich der weiteren Abweichungsfunktion $\Delta'$ umfassen und eine gleiche Intervallbreite von jeweils 32 aufweisen. Jedes der Intervalle $I_1'$, ..., $I_{max}'$ wird nach steigendem Intervallmittelwert indiziert.

Im Schritt (d, ii) wird für sämtliche weiteren Pixel $P_1$, ..., $P_{max}$ sowie die diesen zugeordneten ermittelten Werte der Abweichungsfunktion $\Delta'$ ermittelt, in welche der vergebenen weiteren Intervalle $I_1'$, $I_2'$, ..., $I_{max}'$ sie fallen.

Wie in **Fig. 13** dargestellt, wird ein Speicherbereich C verwendet, der unter Angabe eines Intervalls I(P), eines weiteren Intervalls $I'(P_m)$ sowie eines Verschiebungswerts d eindeutig adressierbar ist. Im vorliegenden Ausführungsbeispiel weist dieser Speicherbereich C insgesamt 8x8x6 numerische Speicherbereiche $c_{i,j,d}$ auf, die zu Beginn der Ausführung des Verfahrens auf einen vorgegebenen Wert, im vorliegenden Fall auf 0, initialisiert werden. Im vorliegenden Ausführungsbeispiel ist der Speicherbereich C als dreidimensionales Speicherfeld angeordnet, das über drei Indizes i, j, d adressierbar ist. Der erste Index i entspricht dem Index des jeweiligen Intervalls I(P), in dem sich der dem jeweiligen Pixel P zugeordnete Abweichungswert $\Delta(P)$ befindet. Der zweite Index j entspricht dem Index des weiteren Intervalls $I'(P_m)$, innerhalb dessen der weitere in Schritt (d, i) ermittelte Abweichungswert $\Delta'(P_m)$ liegt. Der dritte Index d entspricht dem jeweiligen Verschiebungswert d, um den sich die ersten in Längserstreckungsrichtung z gelegenen Koordinaten k, m des Pixels P sowie des weiteren Pixels $P_m$ voneinander unterscheiden.

In Schritt (d, iii) wird nunmehr ein Speicherbereich $c_{i,j,d}$ anhand des dem jeweiligen Pixel P zugewiesenen Intervalls 1 bzw. dessen Index i, des dem weiteren Pixel $P_m$ zugewiesenen weiteren Intervalls I' bzw. dessen Index j sowie dem jeweiligen Verschiebungswert d eindeutig adressiert. Der jeweilige hierdurch adressierte Speicherbereich $c_{i,j,d}$ wird um einen vorgegebenen Wert, im vorliegenden Fall um den Wert 1, erhöht. Nach Durchlaufen sämtlicher Pixel P stellt somit für jeden adressierten Speicherplatz $c_{i,j,d}$ des Speicherbereichs C bzw. für jede Kombination [i, j, d] jedes im Schritt b festgelegten Intervalls I, jedes im Schritt (d, ii) festgelegten weiteren Intervalls I' und jedes Verschiebungswerts d jeweils ein Zählwert zur Verfügung, der angibt, wie oft eine derart festgelegte Kombination [i, j, d] während der durchlaufenen Schritte (a) bis (d) vorgefunden wurde.

Die einzelnen zweidimensionalen Speicherbereiche $C_1$, ..., $C_{max}$ des Speicherbereichs C, die zweidimensionale Speicherbereiche mit jeweils gleichem Verschiebungswert d darstellen, werden im Folgenden als Cooccurrence-Matrizen Cd bezeichnet. Die Elemente $c_{i,j,d}$ der Cooccurrence-Matrizen $C_d$ werden gemäß der folgenden Vorschrift festgelegt:

$$C_d = [c_{i,j,d}]; \qquad c_{i,j,d} = C(I_i, I'_j, d)$$

Die einzelnen Elemente der Cooccurrence-Matrizen $C_d$ werden im vorliegenden Ausführungsbeispiel derart normiert, dass die Summe sämtlicher Einträge innerhalb der jeweiligen Cooccurrence-Matrix insgesamt 1 ergibt. Eine Normierung kann auch auf andere Art und Weise erfolgen, etwa, dass die Summe der Quadrate der einzelnen Einträge der Cooccurrence-Matrix $C_d$ insgesamt 1 ergibt. Die Cooccurrence-Matrix $C_1$, für die jeweils $d=d_1=1$ gilt, ist in **Fig. 13** näher dargestellt.

In weiterer Folge wird aus den einzelnen der in **Fig. 12** dargestellten Cooccurrence-Matrizen eine gemittelte Cooccurrence-Matrix $\underline{C}$ ermittelt, die als Mittelwert der normierten Cooccurrence-Matrizen C gebildet wird. Die einzelnen Einträge $\underline{c}_{i,j}$ der gemittelten Cooccurrence-Matrix $\underline{C}$ werden als Mittelwert der Einträge $c_{i,j,d}$ des Speicherbereichs ermittelt, wobei eine Mittelung über den dritten Index d erfolgt.

Wie in **Fig. 14** dargestellt, werden aus den einzelnen Elementen der ermittelten Cooccurrence-Matrix $\underline{C}$ diejenigen Elemente akkumuliert, deren jeweiliger Index i, j einen vorgegebenen Mindestwert $i_0$, $j_0$ übersteigt. Im vorliegenden Fall werden die Mindestwerte $i_0 = j_0 = 1$ festgesetzt. Als Ergebnis der Akkumulation wird ein Resultatwert u ermittelt, der mit einem vorgegebenen Schwellenwert t verglichen wird. Falls der Resultatwert u den Schwellenwert t übersteigt, wird darauf geschlossen, dass ein Oberflächenfehler F im jeweiligen ausgewählten Bildbereich $L_1$, ..., $L_5$ vorliegt.

**Patentansprüche**

1. Verfahren zur Prüfung eines zusammenhängenden Bildbereichs L innerhalb eines zweidimensionalen Digitalbilds (D) auf das Vorhandensein von Oberflächenfehlern (F) in dem auf den Bildbereich L innerhalb des Digitalbilds (D) abgebildeten Oberflächenbereich eines Gegenstands (G),
wobei der abgebildete Gegenstand (G) eine Längserstreckung aufweist, deren Längserstreckungsrichtung (z) mit der ersten Koordinatenrichtungen des zweidimensionalen Digitalbilds (D) übereinstimmt, und wobei das jeweilige Digitalbild (D) zumindest zwei Bildkanäle (R, B) aufweist, sodass jedem Pixel (P) jeweils ein erster und ein zweiter Intensitätswert (R(P), B(P)) zugeordnet ist,
**dadurch gekennzeichnet, dass**
für jedes Pixel (P) mit Bildkoordinaten (k; l) innerhalb des Bildbereichs L die folgenden Schritte (a) bis (d) durchgeführt werden, nämlich dass

(a) für die beiden Intensitätswerte (R(P), B(P)) der Bildkanäle (R, B) für das jeweilige Pixel (P) ein Abweichungswert ($\Delta(P)$) mittels einer Abweichungsfunktion $\Delta(\cdot,\cdot)$ gemäß $\Delta(P) = \Delta(R(P), B(P))$ ermittelt wird, wobei der Wert der Abweichungsfunktion ($\Delta$) umso größer ist, je mehr der erste Intensitätswert (R(P)) den zweiten Intensitätswert (B(P)) übersteigt,
(b) jeweils für sämtliche Pixel (P) des Bildbereichs auf dieselbe Weise die Anzahl der möglichen Ergebnisse der in Schritt (a) ausgewerteten Abweichungsfunktionen in eine Anzahl von Intervallen ($I_1, I_2, ..., I_{max}$) unterteilt wird, wobei die einzelnen Intervalle nach steigendem Intervallmittelwert indiziert werden, und ermittelt wird, in welches der Intervalle der für das Pixel (P) im Schritt (a) ermittelte Abweichungswert ($\Delta(P)$) fällt und dieses Intervall (I(P)) dem jeweiligen Pixel (P) zugewiesen wird,
(c) jeweils für sämtliche Pixel (P) jeweils eine Anzahl von voneinander unterschiedlichen Verschiebungswerten ($d_1, d_2, ..., d_{max}$) vorgegeben wird, und für das jeweilige Pixel (P) jeweils eine Anzahl von weiteren Pixeln ($P_1, ..., P_{max}$) ermittelt wird, deren in Richtung der Längserstreckung (z) verlaufende Koordinate (m) jeweils um einen der vorgegebenen Verschiebungswerte ($d_1, d_2, ..., d_{max}$) größer ist als die entsprechende Koordinate (k) des jeweiligen Pixels (P) und deren jeweils andere Koordinate (n) der entsprechenden Koordinate (I) des jeweiligen Pixels (P) gleich ist,

$$m = k + d, \; n = l,$$

(d) für jedes der dem jeweiligen Pixel (P) zugeordneten weiteren Pixel ($P_1, ..., P_{max}$)

(i) jeweils ein weiterer Abweichungswert ($\Delta'(P_1), \Delta'(P_2), ..., \Delta'(P_m)... \Delta'(P_{max})$) gemäß $\Delta'(P_m) = \Delta'(R(P_m), B(P_m))$ ermittelt wird, wobei der Wert der weiteren Abweichungsfunktion ($\Delta'$) umso größer ist, je mehr der zweite Intensitätswert (B(P)) den ersten Intensitätswert (R(P)) übersteigt, und
(ii) jeweils für sämtliche weiteren Pixel (P) auf dieselbe Weise die Anzahl der möglichen Ergebnisse der in Schritt (d, i) ausgewerteten weiteren Abweichungsfunktion $\Delta'$ in eine Anzahl von weiteren Intervallen ($I_1', I_2', ..., I_{max}'$) unterteilt wird, wobei die einzelnen Intervalle nach steigendem Intervallmittelwert indiziert werden, und ermittelt wird, in welches der weiteren Intervalle (I'($P_m$)) der für das weitere Pixel ($P_m$) im Schritt (d, i) ermittelte weitere Abweichungswert ($\Delta'(P_m)$) fällt und
(iii) ein durch das dem jeweiligen Pixel zugewiesenen Intervall (I), dem im Schritt (d, ii) ermittelten weiteren Intervall (I') und den jeweiligen Verschiebungswert (d) eindeutig adressierter und vor der Durchführung des Schritts (a) initialisierter Speicherbereich C(I, I', d) um einen vorgegebenen Wert erhöht wird,

sodass nach Durchlaufen sämtlicher Pixel (P) für jede Kombination (I, I', d) jedes im Schritt b) festgelegten Intervalls, eines im Schritt (d, ii) festgelegten weiteren Intervalls ($I_1', I_2', ..., I_{max}'$) und eines Verschiebungswerts (d) jeweils ein Zählwert zur Verfügung steht, und
(e) anschließend aus dem Speicherbereich C für jeden der Verschiebungswerte (d) jeweils eine Cooccurrence-Matrix ($C_1, ..., C_{max}$) ermittelt wird, wobei die einzelnen Elemente ($c_{i,j,d}$) der Cooccurrence-Matrizen ($C_d$) gemäß der folgenden Vorschrift festgelegt werden:

$$C_d = [c_{i,j,d}]; \qquad c_{i,j,d} = C(I_i, I'_j, d)$$

(f) die einzelnen Elemente der Coocurrence -Matrizen normiert werden, und eine gemittelte Cooccurrence-Matrix $\underline{C}$ als Mittelwert der normierten Cooccurrence-Matrizen gebildet wird, und

(g) aus den Elementen der gemittelten Cooccurrence-Matrix $\underline{C}$ diejenigen ihrer Elemente $\underline{c}_{i,j}$ akkumuliert werden, deren jeweiliger Index (i, j) einen vorgegebenen Mindestwert $i_0$, $j_0$ übersteigt, wobei als Ergebnis der Akkumulation ein Resultatwert u erhalten wird, der mit einem Schwellenwert t verglichen wird und

(h) dass für den Fall, dass t > u ein Oberflächenfehler F im jeweiligen auf den Bildbereich L abgebildeten Oberflächenbereich als vorhanden angesehen wird.

2. Verfahren nach Anspruch 1, **dadurch gekennzeichnet, dass** die Abweichungsfunktion $\Delta(\cdot,\cdot)$ wie folgt festgelegt wird:

$$\Delta(P) = \Delta(R(P), B(P)) = \begin{cases} R(P) - B(P), & \text{wenn } R(P) - B(P) > 0 \\ 0, & \text{sonst.} \end{cases}$$

3. Verfahren nach Anspruch 1 oder 2, **dadurch gekennzeichnet, dass** die weitere Abweichungsfunktion $(\Delta'(\cdot,\cdot))$ durch die Abweichungsfunktion $(\Delta(\cdot,\cdot))$ wie folgt festgelegt wird:

$$\Delta'(P_1) = \Delta'(R(P_1), B(P_1)) = \Delta(B(P_1), R(P_1)).$$

4. Verfahren nach einem der vorangehenden Ansprüche, **dadurch gekennzeichnet,**

- **dass** eine Anzahl von, insbesondere gleich großen, Intervallen $(I_1, ..., I_{max})$ im Wertebereich der Abweichungsfunktion ausgewählt wird, die überlappungsfrei und sämtliche möglichen Werte der Abweichungsfunktion abdeckend im Wertebereich der Abweichungsfunktion liegen, **und/oder**

- **dass** eine Anzahl von, insbesondere gleich großen, weiteren Intervallen $(I'_1, ..., I'_{max})$ im Wertebereich der weiteren Abweichungsfunktion ausgewählt wird, die überlappungsfrei und sämtliche möglichen Werte der weiteren Abweichungsfunktion abdeckend im Wertebereich der weiteren Abweichungsfunktion liegen, **und/oder**

- **dass** die Anzahl der Intervalle $(I_1, ..., I_{max})$ und die Anzahl der weiteren Intervalle $(I'_1, ..., I'_{max})$ gleich groß gewählt wird.

5. Verfahren nach einem der vorangehenden Ansprüche, **dadurch gekennzeichnet,**

- **dass** als Verschiebungswerte (d) ganzzahlige Werte in einem Bereich zwischen 1 und 10 gewählt werden, **und/oder**

- **dass** eine Anzahl von drei bis fünf Verschiebungswerten (d) gewählt wird **und/oder**

- **dass** als Verschiebungswerte (d) eine Anzahl von unmittelbar aufeinander folgenden ganzzahligen Werten gewählt wird, deren kleinster Wert zwischen 1 und 3 und/oder deren größter Wert zwischen 5 und 10 und/oder deren Anzahl zwischen 3 und 8 gewählt wird.

6. Verfahren nach einem der vorangehenden Ansprüche, **dadurch gekennzeichnet,**

- **dass** der Mindestwert $(i_0)$ so gewählt wird, dass die Intervalle $(I_1, ..., I_{i0})$, deren zugeordneter Index (i) kleiner ist als der Mindestwert oder dem Mindestwert $(i_0)$ gleicht, einen Anteil von mindestens 5%, insbesondere mindestens 10%, des gesamten Wertebereichs der Abweichungsfunktion umfassen, und/oder

- **dass** der weitere Mindestwert $(j_0)$ so gewählt wird, dass die weiteren Intervalle $(I'_1, ..., I'_{j0})$, deren zugeordneter Index (j) kleiner ist als der weitere Mindestwert oder dem weiteren Mindestwert $(j_0)$ gleicht, einen Anteil von mindestens 5%, insbesondere mindestens 10%, des gesamten Wertebereichs der weiteren Abweichungsfunktion umfassen.

7. Verfahren nach einem der vorangehenden Ansprüche, **dadurch gekennzeichnet, dass** für ein weiteres Pixel $(P_1, ..., P_{max})$ ausschließlich dann ein Wert im Speicherbereich (C) erhöht wird, wenn das weitere Pixel $(P_1, ..., P_{max})$ innerhalb des Bildbereichs L liegt.

8. Verfahren nach einem der vorangehenden Ansprüche, **dadurch gekennzeichnet, dass** die einzelnen Cooccurrence-Matrizen ($C_d$) normiert werden, indem jeder der Werte der jeweiligen Cooccurrence-Matrix ($C_d$) durch die Gesamtsumme der einzelnen Elemente der jeweiligen Cooccurrence-Matrix ($C_d$) dividiert wird.

9. Verfahren nach einem der vorangehenden Ansprüche, **dadurch gekennzeichnet, dass** die mittlere Cooccurrence-Matrix ($\underline{C}$) durch elementweise arithmetische Mittelwertbildung der Cooccurrence-Matrizen ($C_d$) erstellt wird, insbesondere gemäß der folgenden Vorschrift:

$$\underline{C} = 1/N * \text{SUMME}(d=1...N)\ C_d$$

wobei N der Anzahl der Cooccurrence-Matrizen ($C_d$) entspricht.

10. Verfahren nach einem der vorangehenden Ansprüche, **dadurch gekennzeichnet, dass** vor der Bestimmung von Oberflächenfehlern F das Digitalbild (D) folgendermaßen aufgenommen wird:

a) dass der Gegenstand (G) mit einem Zeilensensor (2) aufgenommen wird, dessen Aufnahmebereich in einer vorgegebenen Ebene (xy) liegt, die normal zur Längserstreckungsrichtung (z) des Gegenstands (G) ausgerichtet ist, wobei sich der Gegenstand (G) im Aufnahmebereich (20) des Zeilensensors (2) befindet,
b) dass zumindest zwei gegenüber dem Zeilensensor (2) lagefest angeordnete Lichtquellen (31, 32) eingesetzt werden, wobei die erste Lichtquelle (31) zur Abgabe einer Strahlung im Wellenlängenbereich des ersten Bildkanals (R) in Längserstreckungsrichtung (z) vor dem Zeilensensor (2) angeordnet wird und die zweite Lichtquelle (32) zur Abgabe einer Strahlung im Wellenlängenbereich des zweiten Bildkanals (B) in Längserstreckungsrichtung (z) hinter dem Zeilensensor (2) angeordnet wird und das jeweilige Licht beider Lichtquellen (31, 32) in dem Bereich des Gegenstands (G) eingestrahlt wird, der im Aufnahmebereich des Zeilensensors (2) liegt,
c) dass der Zeilensensor (2) jeweils eine Anzahl von Pixelsensoren zur separaten Erkennung des Lichts einer der beiden Lichtquellen (31, 32) für jeweils einen der beiden Bildkanäle (R, B) aufweist, wobei mit jedem der Pixelsensoren separat ein Intensitätswert (R, B) des von jeder der beiden Lichtquellen (31, 32) abgegebenen und auf ihn reflektierten Lichts gemessen wird,
d) dass mit jedem Pixelsensor jeweils ein erster Intensitätswert (R) ermittelt wird, der dem von der ersten Lichtquelle (31) abgegebenen und auf den Pixelsensor reflektierten Licht entspricht, und ein zweiter Intensitätswert (B) ermittelt wird, der dem von der zweiten Lichtquelle (32) abgegebenen und auf den Pixelsensor reflektierten Licht entspricht,
e) dass der Zeilensensor (2) und die Lichtquellen (31, 32) zueinander lagefest sind und in Längserstreckungsrichtung (z) des zu inspizierenden Gegenstands (G) relativ zu diesem bewegt werden, und
f) dass mit dem Zeilensensor (2) eine Anzahl von Zeilenbildern aufgenommen wird, die entsprechend ihrer Aufnahmereihenfolge zu einem zweidimensionalen Digitalbild (D) zusammengesetzt werden.

11. Verfahren nach einem der vorangehenden Ansprüche, **dadurch gekennzeichnet, dass** aus dem Digitalbild mit Mitteln der Blob-Analyse einzelne Blobs detektiert werden und die detektierten Blobs als zusammenhängende Bildbereiche (L) herangezogen werden.

12. Datenträger, auf dem ein Computerprogramm zur Durchführung eines Verfahrens nach einem der vorangehenden Ansprüche abgespeichert ist.

**Claims**

1. A method for checking a contiguous image area L within a two-dimensional digital image (D) for the presence of surface defects (F) within the surface area of an object (G) imaged onto the image area L within the digital image (D), wherein the imaged object (G) has a length dimension the direction of length dimension (z) of which coincides with the first coordinate directions of the two-dimensional digital image (D), and wherein the respective digital image (D) has at least two image channels (R, B) so that each pixel (P) has a first and second intensity value (R(P), B(P)) assigned thereto,
**characterized in that**
for each pixel (P) with the image coordinates (k; 1) within the image area L, the following steps (a) to (d) are performed, i.e. **in that**

(a) for the two intensity values (R(P), B(P)) of the image channels (R, B) for the respective pixel (P) a deviation value ($\Delta$(P)) is determined by means of a deviation function $\Delta$(.,.) according to $\Delta$(P) = $\Delta$(R(P), B(P)), wherein the value of the deviation function ($\Delta$) is the greater the more the first intensity value (R(P)) exceeds the second intensity value (B(P)),

(b) respectively for all pixels (P) of the image area in the same way, the number of possible results of the deviation functions evaluated in step (a) is divided into a number of intervals ($I_1$, $I_2$, ..., $I_{max}$), wherein the individual intervals are indexed according to an increasing interval average, and it is determined in which of the intervals falls the deviation value ($\Delta$(P)) determined in step (a) for pixel (P) and said interval (I(P)) is assigned to the respective pixel (P),

(c) respectively for all pixels (P), respectively a number of mutually different shift values ($d_1$, $d_2$, ..., $d_{max}$) is specified, and for said respective pixel (P), respectively a number of further pixels ($P_1$, ..., $P_{max}$) is determined, the coordinate (m) of which extending in the direction of the length dimension (z) is respectively greater by one of the specified shift values ($d_1$, $d_2$, ..., $d_{max}$) than the corresponding coordinate (k) of the respective pixel (P) and the respectively other coordinate (n) of which is equal to the corresponding coordinate (I) of the respective pixel (P,

$$m = k + d, \quad n = I,$$

(d) for each of the further pixels ($P_1$, ..., $P_{max}$) assigned to the respective pixel (P)

(i) respectively one further deviation value ($\Delta$'($P_1$), $\Delta$'($P_2$) ..., $\Delta$'($P_m$) ... $\Delta$'($P_{max}$)) is determined according to $\Delta$'($P_m$) - $\Delta$' (R($P_m$), B($P_m$)), wherein the value of the further deviation function ($\Delta$') is the greater the more the second intensity value (B(P)) exceeds the first intensity value R(P), and

(ii) respectively for all further pixels (P) in the same way, the number of possible results of the further deviation function $\Delta$' evaluated in step (d, i) is divided into a number of further intervals ($I_1$', $I_2$', ..., $I_{max}$'), wherein the individual intervals are indexed according to the increasing interval average, and it is determined into which of the further intervals (I'($P_m$)) falls the further deviation value ($\Delta$'($P_m$)) determined for said further pixel ($P_m$) in step (d, i), and

(iii) a memory area C(I, I', d) uniquely addressed by the interval (I) assigned to the respective pixel, the further interval (I') determined in step (d, ii), and the respective shift value (d), and initialized prior to execution of step (a), is increased by a specified value, so that when all pixels (P) have been passed for each combination (I, I', d) of each interval defined in step (b), a further interval ($I_1$', $I_2$', ..., $I_{max}$') defined in step (d, ii), and a shift value (d), respectively one counting value is available, and

(e) subsequently, for each of the shift values (d), respectively one co-occurrence matrix ($C_1$, ..., $C_{max}$) is determined from the memory area C, wherein the individual elements ($C_{i,j,d}$) of the co-occurrence matrixes ($C_d$) are defined according to the following rule:

$$C_d = [c_{i,j,d}] ; \quad c_{i,j,d} = C(I_i, I'_j, d)$$

(f) the individual elements of the co-occurrence matrixes are normalized and one averaged co-occurrence matrix C is formed as the average of the normalized co-occurrence matrixes, and

(g) from the elements of the averaged co-occurrence matrix C, those elements $c_{i,j}$ are accumulated the respective index (i, j) of which exceeds a specified minimum $i_0$, $j_0$, wherein as a result of the accumulation, a resulting value u is obtained which is compared to a threshold value t, and

(h) **in that** in case t > u, a surface defect F in the respective surface area imaged on the image area is considered as being present.

2. The method according to claim 1, **characterized in that** the deviation function $\Delta$(.,.) is defined as:

$$\Delta(P) = \Delta(R(P), (B(P)) = \begin{cases} R(P) - B(P), & \text{if } R(P) - B(P) > 0 \\ 0, & \text{else.} \end{cases}$$

**3.** The method according to claim 1 or 2, **characterized in that** the further deviation function $\Delta(.,.)$ is defined by the deviation function ($\Delta(.,.)$) as:

$$\Delta'(P_1) = \Delta'(R(P_1), B(P_1)) = \Delta(B(P_1), R(P_1)).$$

**4.** The method according to any of the preceding claims, **characterized in that**

- a number of in particular equally sized intervals ($I_1, ..., I_{max}$) is selected in the value range of the deviation function which are comprised in the value range of the deviation function without any overlap and while covering any possible values of the deviation function, and/or
- a number of in particular equally sized further intervals ($I'_1, ..., I'_{max}$) is selected in the value range of the further deviation function which are comprised in the value range of the further deviation function without any overlap and while covering any possible values of the further deviation function, and/or
- the number of intervals ($I_1, ..., I_{max}$) and the number of the further intervals ($I'_1, ..., I'_{max}$) are selected to be of the same size.

**5.** The method according to any of the preceding claims, **characterized in that**

- as shift values (d), integer values in a range comprised between 1 and 10 are selected, and/or
- a number from three to five shift values (d) is selected, and/or
- as shift values (d), a number of directly consecutive integer values is selected, the smallest value between 1 and 3 of which, and/or the greatest value between 5 and 10 of which, and/or the number between 3 and 8 of which is selected.

**6.** The method according to any of the preceding claims, **characterized in that**:

- the minimum value ($i_0$) is selected so that the intervals ($I_1, ..., I_{10}$), the assigned index (i) of which is smaller than the minimum value or equal to the minimum value ($i_0$) include a proportion of at least 5 %, in particular at least 10 %, of the entire value range of the deviation function, and/or
- the further minimum value ($j_0$) is selected so that the further intervals ($I'_1, ..., I'_{j0}$) the assigned index (j) of which is smaller than the further minimum value or equal to the further minimum value ($j_0$) include a proportion of at least 5 %, in particular at least 10 % of the entire value range of the further deviation function.

**7.** The method according to any of the preceding claims, **characterized in that** for another pixel ($P_1, ..., P_{max}$), a value in the memory area (C) is increased only if the further pixel ($P_1, ..., P_{max}$) is located within the image area L.

**8.** The method according to any of the preceding claims, **characterized in that** the individual co-occurrence matrixes ($C_d$) are normalized **in that** each of the values of the respective co-occurrence matrix ($C_d$) is divided by the total of the individual elements of the respective co-occurrence matrix ($C_d$).

**9.** The method according to any of the preceding claims, **characterized in that** the average co-occurrence matrix (C) is created by element-by-element arithmetic averaging of the co-occurrence matrixes ($C_d$), in particular according to the following rule:

$$\underline{C} = 1/N * SUM(d = 1 ... N) C_d$$

where N is the number of co-occurrence matrixes ($C_d$).

10. The method according to any of the preceding claims, **characterized in that** prior to determining the surface defects F, the digital image (D) is captured **in that**:

   a) the object (G) is captured by a line sensor (2) the capture range of which is located in a specified plane (xy) which is aligned normally to the direction of length dimension (z) of the object (G), the object (G) being located within the capture range (20) of the line sensor (2),

   b) at least two light sources (31, 32) stabilized with respect to the line sensor (2) are implemented, wherein the first light source (31) for delivering radiation in the wavelength range of the first image channel (R) in the direction of length dimension (z) is arranged before the line sensor (2), and the second light source (32) for delivering radiation in the wavelength range of the second image channel (B) in the direction of length dimension (z) is arranged after the line sensor (2), and the respective light of both light sources (31, 32) is injected in the area of the object (G) located within the capture range of the line sensor (2),

   c) the line sensor (2) has respectively a number of pixel sensors for separate detection of the light of one of the two light sources (31, 32) for respectively one of both image channels (R, B), wherein each of the pixel sensors separately measures an intensity value (R, b) of the light output by each of the two light sources (31, 32) and reflected onto the same,

   d) each pixel sensor respectively determines a first intensity value (R) which corresponds to the light output by the first light source (31) and reflected onto the pixel sensor, and a second intensity value (B) is determined which corresponds to the light output by the second light source (32) and reflected onto the pixel sensor,

   e) the line sensor (2) and the light sources (31, 32) are stabilized with respect to each other and are moved in the direction of length dimension (z) of the object (G) to be inspected in relation thereto, and

   f) the line sensor (2) captures a number of line images which are merged according to the order of capture into a two-dimensional digital image (D).

11. The method according to any of the preceding claims, **characterized in that** by means of blob analysis individual blobs are detected from the digital image, and the detected blobs are used as contiguous image areas (L).

12. A data medium on which a computer program for executing a method according to any of the preceding claims is stored.

**Revendications**

1. Procédé pour examiner une zone d'image cohérente L à l'intérieur d'une image numérique bidimensionnelle (D) quant à la présence de défauts de surface (F) à l'intérieur de la zone de surface d'un objet (G), représentée sur la zone d'image L à l'intérieur de l'image numérique (D), dans lequel l'objet reproduit (G) présente une dimension longitudinale dont la direction de dimension longitudinale (z) coïncide avec les premières directions de coordonnées de l'image numérique bidimensionnelle (D), et dans lequel l'image numérique (D) respective présente au moins deux canaux d'image (R, B) de sorte que chaque pixel (P) se voit attribuer une première et une deuxième valeur d'intensité (R(P), B(P)), **caractérisé en ce que** pour chaque pixel (P) avec des coordonnées d'image (k ; 1) à l'intérieur de la zone d'image L, les étapes suivantes (a) à (d) sont effectuées, c'est-à-dire **en ce que**

   (a) pour les deux valeurs d'intensité (R(P), B(P)) des canaux d'image (R, B), pour le pixel respectif (P), une valeur d'écart ($\Delta(P)$) est déterminée au moyen d'une fonction d'écart $\Delta(.,.)$ selon $\Delta(P) = \Delta(R(P), B(P))$, dans lequel la valeur de la fonction d'écart ($\Delta$) est d'autant plus grande que la première valeur d'intensité valeur (R(P)) dépasse la deuxième valeur d'intensité (B(P)),

   (b) respectivement pour tous les pixels (P) de la zone d'image et de la même manière, le nombre des résultats possibles des fonctions d'écart évaluées à l'étape (a) est divisé en un nombre d'intervalles ($I_1$, $I_2$, ..., $I_{max}$), dans lequel les intervalles individuels sont indexés selon une valeur moyenne d'intervalles croissante, et il est déterminé dans lequel des intervalles tombe la valeur d'écart ($\Delta(P)$) déterminée à l'étape (a) pour le pixel (P) et ledit intervalle (I(P)) est attribué au pixel respectif (P),

   (c) respectivement pour tous les pixels (P), un nombre de valeurs de décalage mutuellement différentes ($d_1$, $d_2$, ..., $d_{max}$) est spécifié respectivement, et pour ledit pixel respectif (P), un nombre d'autres pixels ($P_1$, ..., $P_{max}$) est déterminé respectivement, dont la coordonnée (m) qui s'étend dans la direction de dimension longitudinale (z) est respectivement plus grande d'une des valeurs de décalage spécifiées ($d_1$, $d_2$, ..., $d_{max}$) que la coordonnée correspondante (k) du pixel respectif (P) et dont l'autre coordonnée (n) respectivement est égale à la coordonnée correspondante (I) du pixel respectif (P),

$$m = k + d, \; n = I,$$

(d) pour chacun des autres pixels ($P_1$, ..., $P_{max}$) attribués au pixel respectif (P)

(i) respectivement une autre valeur d'écart ($\Delta(P_1)$, $\Delta'(P_2)$, ..., $\Delta'(P_m)$ ... $\Delta'(P_{max})$) est déterminée selon $\Delta'(P_m)$ = $\Delta'$ (R ($P_m$), B ($P_m$)), dans lequel la valeur de l'autre fonction d'écart ($\Delta'$) est d'autant plus grande que la deuxième valeur d'intensité (B(P)) dépasse la première valeur d'intensité (R(P)), et

(ii) respectivement pour tous les autres pixels (P) et de la même manière, le nombre des résultats possibles de l'autre fonction d'écart $\Delta'$ évaluée à l'étape (d, i) est divisé en un nombre d'autres intervalles ($I_1'$, $I_2'$, ..., $I_{max}'$), dans lequel les intervalles individuels sont indexés selon la valeur moyenne d'intervalles croissante, et il est déterminé dans lequel des autres intervalles (I' ($P_m$)) tombe l'autre valeur d'écart ($\Delta'(P_m)$) déterminée pour ledit autre pixel ($P_m$) à l'étape (d, i), et

(iii) une zone de mémoire C(I, I', d) qui est adressée de manière univoque par l'intervalle (I) attribué au pixel respectif, l'autre intervalle (I') déterminé à l'étape (d, ii), et la valeur de décalage (d) respective, et qui est initialisée avant l'exécution de l'étape (a), est incrémentée d'une valeur spécifiée,

de sorte qu' après le passage de tous les pixels (P) pour chaque combinaison (I, I', d) de chaque intervalle fixé à l'étape (b), d'un autre intervalle ($I_1'$, $I_2'$, ..., $I_{max}'$) fixé à l'étape (d, ii), et d'une valeur de décalage (d), respectivement une valeur de comptage est disponible, et

(e) par la suite, pour chacune des valeurs de décalage (d), respectivement une matrice de co-occurrence ($C_1$, ..., $C_{max}$) est déterminée à partir de la zone de mémoire C, dans lequel les éléments individuels ($c_{i,j,d}$) des matrices de co-occurrence ($C_d$) sont fixés selon la règle suivante :

$$C_d = [c_{i,j,d}] \; ; \quad c_{i,j,d} = C(I_i, \; I'_j, \; d)$$

(f) les éléments individuels des matrices de co-occurrence sont normalisés et une matrice de co-occurrence moyenne $\underline{C}$ est formée en tant que valeur moyenne des matrices de co-occurrence normalisées, et

(g) parmi les éléments de la matrice de co-occurrence moyenne $\underline{C}$ sont cumulés ceux de ses éléments $c_{i,j}$ dont l'indice respectif (i, j) dépasse une valeur minimale spécifiée ($i_0$, $j_0$), dans lequel est obtenue comme résultat du cumul une valeur résultante u qui est comparée à une valeur de seuil t, et

(h) dans le cas où t > u, un défaut de surface F dans la zone de surface respective représentée sur la zone d'image L est considéré comme étant présent.

**2.** Procédé selon la revendication 1, **caractérisé en ce que** la fonction d'écart $\Delta(.,.)$ est déterminée comme suit :

$$\Delta(P) = \Delta(R(P), (B(P)) = \begin{cases} R(P) - B(P), & \text{si } R(P) - B(P) > 0 \\ 0, & \text{sinon.} \end{cases}$$

**3.** Procédé selon la revendication 1 ou 2, **caractérisé en ce que** l'autre fonction d'écart ($\Delta'(.,.)$) est déterminée par la fonction d'écart ($\Delta(.,.)$) comme suit :

$$\Delta'(P_1) = \Delta'(R(P_1), B(P_1)) = \Delta(B(P_1), R(P_1)).$$

**4.** Procédé selon l'une quelconque des revendications précédentes, **caractérisé**

- **en ce qu'**on sélectionne un nombre d'intervalles, en particulier de même taille, $(I_1, ..., I_{max})$ dans la plage de valeurs de la fonction d'écart qui se trouvent dans la plage de valeurs de la fonction d'écart sans recouvrement et en couvrant toutes les valeurs possibles de la fonction d'écart, et/ou
- **en ce qu'**on sélectionne un nombre d'autres intervalles, en particulier de même taille, $(I'_1, ..., I'_{max})$ dans la plage de valeurs de l'autre fonction d'écart qui se trouvent dans la plage de valeurs de l'autre fonction d'écart sans recouvrement et en couvrant toutes les valeurs possibles de l'autre fonction d'écart, et/ou
- **en ce qu'**on sélectionne le nombre d'intervalles $(I_1, ..., I_{max})$ et le nombre des autres intervalles $(I'_1, ..., I'_{max})$ pour être identiques.

**5.** Procédé selon l'une quelconque des revendications précédentes, **caractérisé**

- **en ce qu'**on sélectionne comme valeurs de décalage (d) des valeurs entières dans une plage comprise entre 1 et 10, et/ou
- **en ce qu'**on sélectionne un nombre de trois à cinq valeurs de décalage (d), et/ou
- **en ce qu'**on sélectionne comme valeurs de décalage (d) un nombre de valeurs entières directement consécutives, dont la plus petite valeur est sélectionnée entre 1 et 3 et/ou dont la plus grande valeur est sélectionnée entre 5 et 10 et/ou dont le nombre est sélectionné entre 3 et 8.

**6.** Procédé selon l'une quelconque des revendications précédentes, **caractérisé**

- **en ce qu'**on sélectionne la valeur minimale $(i_0)$ de telle sorte que les intervalles $(I_1, ..., I_{i_0})$ dont l'indice attribué (i) est inférieur à la valeur minimale ou égal à la valeur minimale $(i_0)$ comprennent une fraction d'au moins 5 %, en particulier au moins 10 %, de la plage de valeurs entière de la fonction d'écart, et/ou
- **en ce qu'**on sélectionne l'autre valeur minimale $(j_0)$ de telle sorte que les autres intervalles $(I'_1, ..., I'_{j_0})$ dont l'indice attribué (j) est inférieur à l'autre valeur minimale ou égale à l'autre valeur minimale $(j_0)$ comprennent une fraction d'au moins 5 %, en particulier au moins 10 % de la plage de valeurs entière de l'autre fonction d'écart.

**7.** Procédé selon l'une quelconque des revendications précédentes, **caractérisé en ce que** pour un autre pixel $(P_1, ..., P_{max})$, une valeur dans la zone de mémoire (C) est incrémentée uniquement si l'autre pixel $(P_1, ..., P_{max})$ se trouve à l'intérieur de la zone d'image L.

**8.** Procédé selon l'une quelconque des revendications précédentes, **caractérisé en ce que** les matrices de co-occurrence individuelles $(C_d)$ sont normalisées **en ce que** chacune des values de la matrice de co-occurrence respective $(C_d)$ est divisée par le total des éléments individuels de la matrice de co-occurrence respective $(C_d)$.

**9.** Procédé selon l'une quelconque des revendications précédentes, **caractérisé en ce que** la matrice de co-occurrence moyenne $(\underline{C})$ est créée élément par élément par établissement de la moyenne arithmétique des matrices de co-occurrence $(C_d)$, en particulier selon la règle suivante :

$$\underline{C} = 1/N * SOMME(d = 1 \dots N) \; C_d$$

où N est le nombre des matrices de co-occurrence $(C_d)$.

**10.** Procédé selon l'une quelconque des revendications précédentes, **caractérisé en ce qu'**avant la détermination des défauts de surface F, l'image numérique (D) est acquise **en ce que** :

a) l'objet (G) est enregistré par un capteur linéaire (2) dont la plage d'enregistrement se trouve dans un plan spécifié (xy) qui est aligné perpendiculairement à la direction de dimension longitudinale (z) de l'objet (G), dans lequel l'objet (G) se trouve dans la plage d'enregistrement (20) du capteur linéaire (2),

b) au moins deux sources de lumière (31, 32) stabilisées par rapport au capteur linéaire (2) sont mises en oeuvre, dans lequel la première source de lumière (31) pour délivrer un rayonnement dans la plage de longueurs d'onde du premier canal d'image (R) dans la direction de dimension longitudinale (z) est disposée avant le capteur linéaire (2), et la deuxième source de lumière (32) pour délivrer un rayonnement dans la plage de longueurs d'onde du deuxième canal d'image (B) dans la direction de dimension longitudinale (z) est disposée après le capteur linéaire (2), et la lumière respective des deux sources de lumière (31, 32) est injectée dans la zone de l'objet (G) qui se trouve dans la zone d'enregistrement du capteur linéaire (2),

c) le capteur linéaire (2) présente respectivement un nombre de capteurs de pixels pour une détection séparée de la lumière d'une des deux sources de lumière (31, 32) pour l'un des deux canaux d'image (R, B) respectivement, dans lequel chacun des capteurs de pixels mesure séparément une valeur d'intensité (R, b) de la lumière délivrée par chacune des deux sources de lumière (31, 32) et réfléchie sur celui-ci,

d) chaque capteur de pixels détermine respectivement une première valeur d'intensité (R) qui correspond à la lumière délivrée par la première source de lumière (31) et réfléchie sur le capteur de pixels, et détermine une deuxième valeur d'intensité (B) qui correspond à la lumière délivrée par la deuxième source de lumière (32) et réfléchie sur le capteur de pixels,

e) le capteur linéaire (2) et les sources de lumière (31, 32) sont stabilisés les uns par rapport aux autres et sont déplacés par rapport à l'objet (G) à inspecter dans la direction de dimension longitudinale (z) de celui-ci, et

f) le capteur linéaire (2) enregistre un nombre d'images de ligne qui sont assemblées dans l'ordre de leur enregistrement en une image numérique bidimensionnelle (D).

**11.** Procédé selon l'une quelconque des revendications précédentes, **caractérisé en ce qu'**à partir de l'image numérique, avec des moyens d'analyse de blob, des blobs individuels sont détectés, et les blobs détectés sont utilisés comme des zones d'images (L) cohérentes.

**12.** Support de données sur lequel un programme informatique est stocké pour l'exécution d'un procédé selon l'une quelconque des revendications précédentes.

Fig. 1

Fig. 5

Fig. 6

Fig. 7

EP 2 693 403 B1

Fig. 2

Fig. 3

Fig. 4

Fig. 11

EP 2 693 403 B1

Fig. 8

Fig. 9

EP 2 693 403 B1

EP 2 693 403 B1

Fig. 10

Fig. 12

$C_{max}$

$C_1$

$C$

| | $I_1$ | $I_2$ | ... | ... | ... | ... | ... | $I_{max}$ |
|---|---|---|---|---|---|---|---|---|
| $I'_1$ | 0.10 | 0.02 | 0.00 | 0.06 | 0.44 | 0.00 | 0.00 | 0.00 |
| $I'_2$ | 0.00 | 0.00 | 0.00 | 0.00 | 0.04 | 0.00 | 0.00 | 0.00 |
| : | 0.03 | 0.04 | 0.00 | 0.05 | 0.07 | 0.00 | 0.00 | 0.00 |
| : | 0.00 | 0.00 | 0.00 | 0.01 | 0.00 | 0.00 | 0.00 | 0.00 |
| : | 0.03 | 0.01 | 0.00 | 0.08 | 0.00 | 0.00 | 0.00 | 0.00 |
| : | 0.00 | 0.00 | 0.00 | 0.00 | 0.00 | 0.00 | 0.00 | 0.00 |
| : | 0.00 | 0.00 | 0.00 | 0.00 | 0.00 | 0.00 | 0.00 | 0.00 |
| $I'_{max}$ | 0.00 | 0.00 | 0.00 | 0.00 | 0.00 | 0.00 | 0.00 | 0.00 |

$d_{max}$

$d_3$

$d_2$

$d_1$

Fig. 13

$i_0$

$i$

$j_0$

$j$

$C$

| | $I_1$ | $I_2$ | ... | ... | ... | ... | ... | $I_{max}$ |
|---|---|---|---|---|---|---|---|---|
| $I'_1$ | 0.10 | 0.02 | 0.00 | 0.06 | 0.44 | 0.00 | 0.00 | 0.00 |
| $I'_2$ | 0.00 | 0.00 | 0.00 | 0.00 | 0.04 | 0.00 | 0.00 | 0.00 |
| : | 0.03 | 0.04 | 0.00 | 0.05 | 0.07 | 0.00 | 0.00 | 0.00 |
| : | 0.00 | 0.00 | 0.00 | 0.01 | 0.00 | 0.00 | 0.00 | 0.00 |
| : | 0.03 | 0.01 | 0.00 | 0.08 | 0.00 | 0.00 | 0.00 | 0.00 |
| : | 0.00 | 0.00 | 0.00 | 0.00 | 0.00 | 0.00 | 0.00 | 0.00 |
| : | 0.00 | 0.00 | 0.00 | 0.00 | 0.00 | 0.00 | 0.00 | 0.00 |
| $I'_{max}$ | 0.00 | 0.00 | 0.00 | 0.00 | 0.00 | 0.00 | 0.00 | 0.00 |

Fig. 14